# EUROPÄISCHE PATENTANMELDUNG

(11) **EP 0 925 977 A2**
(43) Veröffentlichungstag der Anmeldung: **30.06.1999**
(21) Anmeldenummer: 98124516.0
(22) Anmeldetag: 22.12.1998
(51) Int. Cl.: B60J 7/057, B60J 10/12

(54) **Deckel eines öffnungsfähigen Fahrzeugdachs**

(30) Priorität: 23.12.1997 DE 19757454
(71) Anmelder: WEBASTO KAROSSERIESYSTEME GmbH, D-82131 Stockdorf (DE)
(72) Erfinder: Brandner, Hans, 85221 Dachau (DE); Jardin, Hans, 82266 Inning (DE); Schröferl, Thomas, 82069 Hohenschäftlarn (DE); Petri, Volker, 71134 Aidlingen (DE); Mickeler, Reinhold, 71155 Altdorf (DE); Herlemann, Werner, 71134 Aidlingen (DE); Benda, Hans, 71134 Aidlingen (DE)
(74) Vertreter: Wiese, Gerhard

(57) **Zusammenfassung**

Die Erfindung betrifft einen Deckel (2) eines öffnungsfähigen Fahrzeugdachs (1) mit einer Deckelplatte (3), die im Kantenbereich von einem abgeschäumten oder angespritzen Kunststoffrahmen (4) umgeben wird, der gleichzeitig zur Anbindung wenigstens eines Befestigungsteils (Deckelinnenblech 6) des Deckels dient. Erfindungsgemäß ist in den Kunststoffrahmen (4) wenigstens ein an einer Wand (6A) des Deckelinnenblechs (6) angeordnetes Sensorelement (8) integriert, das beim Schließen des Deckels (2) mittels einer partiellen Deformation des Kunststoffrahmens (4) ein Einklemmen eines Körperteils oder Gegenstandes signalisiert.

## Beschreibung

Die Erfindung bezieht sich auf einen Deckel eines öffnungsfähigen Fahrzeugdachs gemäß dem Oberbegriff des Patentanspruchs1.

Aus DE 297 04 030 U1 ist ein Deckel eines Schiebedachs bekannt, bei dem eine transparente Scheibe als Deckelplatte und ein in den Randbereichen darunter liegendes Befestigungsteil in Form eines abgekanteten Deckelinnenblechs durch einen angeschäumten oder angespritzen Kunststoffrahmen miteinander verbunden sind, wobei der Kunststoffrahmen an seinem Außenumfang gleichzeitig eine Kontur zur Halterung eines Dichtungsteils aufweist.

Derartige Dichtungsteile können gemäß DE 44 27 537 A1 als Hohlkammerprofile ausgebildet sein, in welche ein druckempfindliches, streifenförmiges Sensorelement zur Erkennung eines Einklemmfalles beim Schließen des Deckels integriert ist. Das Einbringen des Sensorelements in die Hohlkammerdichtung im Extrudierverfahren und die Befestigung der Dichtung am Deckel stellen aufwendige Fertigungs- und Montageschritte dar, die die Herstellung eines Schiebedachdeckels stark verteuern.

Der vorliegenden Erfindung liegt die Aufgabe zugrunde, einen Deckel für ein öffnungsfähiges Fahrzeugdach der eingangs genannten Art bereitzustellen, der Mittel zum Erkennen eines Einklemmfalles aufweist und kostengünstig herstellbar ist.

Diese Aufgabe wird erfindungsgemäß durch die Merkmale des Patentanspruchs 1 gelöst. Vorteilhafte Weiterbildungen der Erfindung sind den Unteransprüchen zu entnehmen.

Gemaß dem Kerngedanken der vorliegenden Erfindung wird ein druckempfindliches Sensorelement in einen zumindestens partiell verformbaren angeschäumten oder angespritzen Kunststoffrahmen eines Deckels unmittelbar integriert. Die Anordnung des Sensorelements an einem Versteifungs- oder Befestigungsteil, das bei der Herstellung des Kunststoffrahmens ohnehin im Formwerkzeug positioniert werden muß, ermöglicht eine besonders einfache Positionierung und Verbindung eines Sensorelements mit dem Deckel. Das Sensorelement stützt sich mit seiner Rückseite am steifen Befestigungsteil ab. Dadurch wird dessen Druckempfindlichkeit an der Vorderseite erhöht. Es wird ferner eine geschützte Anordnung des Sensorelements ermöglicht, weil der das Sensorelement abdeckende Kunststoffrahmen eine höhere Stabilität aufweist als beispielsweise eine Gummidichtung. Schließlich wird auch die Kontaktherstellung zwischen dem Sensorelement und einer Auswertelogik besonders erleichtert, denn die elektrischen Anschlußverbindungen können ebenfalls problemlos beim Umspritzen oder Umschäumen der Glasscheibe und der Verstärkungsteile mit in den Kunststoffrahmen eingebettet werden.

Vorzugsweise ist die Wand des Befestigungsteil, an dem das Sensorelement angeordnet ist, von außen nach innen schräg abwärts geneigt. Insbesondere mit einer V-förmigen oder trapezförmigen Nut im Kunststoffrahmen ergibt sich dadurch eine günstige Übertragung der Kräfte von einem Einklemmgegenstand auf das Sensorelement. Eine solche Anordnung des Sensorelements von oben nach unten schräg nach innen abfallend ist sowohl zur Erkennung eines Einklemmfalles an der Vorderkante eines sich schließenden Schiebedachdeckels als auch zur Erkennung eines Einklemmfalles an der Hinterkante eines sich absenkenden Deckels eines Schiebehebedachs oder Hebedachs bestens geeignet.

Gemäß einer vorteilhaften Ausgestaltung der Erfindung ist an der Unterseite des Kunststoffrahmens im Bereich des Sensorelements eine Nut vorgesehen. Eine derartige Nut kann beispielsweise von einem Werkzeugteil (Schieber) beim Umschäumen oder Umspritzen erzeugt werden.

Eine besonders günstige Krafteinleitung in das Sensorelement ergibt sich dann, wenn der Nutgrund etwa auf Höhe der Mitte des Sensorelements verläuft. Bei der Verformung des Außenrandes des Kunststoffrahmens im Einklemmfall stellen sich hierbei besonders günstige Hebelverhältnisse für die Kraftübertragung auf das Sensorelement ein.

Bevorzugt wird das Sensorelement bereits vor dem Umschäumen oder Umspritzen der Deckelplatte, beispielsweise durch Kleben am Versteifungs- oder Befestigungsteil fixiert, sodaß es gemeinsam mit diesem im Formwerkzeug unmittelbar auch positioniert wird. Das Sensorelement kann jedoch ebenso gut auch alternativ in einer beim Umspritzen oder Umschäumen mittels eines Formteils erzeugten Nut nachträglich beispielsweise durch Kleben an einer an die Nut angrenzenden Wand des Befestigungsteils angebracht werden.

Gemäß einer weiteren bevorzugten Ausgestaltung der Erfindung ist die Nut durch querverlaufende Kippen des Kunststoffrahmens unterbrochen. Diese Kippen dienen der Kraftübertragung vom Außenrand des Kunststoffrahmens auf das Sensorelement.

Gemäß einer weiteren vorteilhaften Ausgestaltung ist vorgesehen, daß die Nut von einem gegenüber dem Material des Kunststoffrahmens weicheren elastischen Material ausgefüllt ist. Eine günstige Abstufung sieht vor, daß der Kunststoffrahmen aus Polyurethan mit einer Shorehärte von etwa 90° besteht, während das weichere Material eine Shorehärte von etwa 30° aufweist. Eine derartige Auffüllung mit weicherem Material kann besonders einfach durch ein Zwei-Komponenten-Spritzverfahren realisiert werden. Das weichere elastische Material dient zum einen der Abdeckung des Sensorelements nach unten und zum anderen der Übertragung der auf den Außenrand des Rahmens einwirkenden Druckkräfte auf das Sensorelement, und zwar alternativ oder ergänzend zur unmittelbaren Einwirkung einer Verformung des Außenrandes oder der Querrippen des Kunststoffrahmens auf das Sensorelement.

Für eine leichtere Übertragung der Druckkräfte ist es vorteilhaft, wenn eine Anlagefläche an der Außenkante des Deckels schräg nach unten abfallend geneigt ist. Eine derartige Form erleichtert durch eine Linienberührung eines einklemmenden Gegenstandes an der vorspringenden unteren Außenkante des Deckels eine Verformung des Kunststoffrahmens und damit eine Erkennung des Einklemmfalles.

Das bevorzugt streifenförmig ausgebildete Sensorelement erstreckt sich bei einem Deckel eines Schiebedaches zumindestens im Bereich der Vorderkante und bei einem Deckel, dessen Hinterkante über das feste Fahrzeugdach ausstellbar ist, wie einem Schiebehebedach oder einem Hebedach, auch zumindestens über einen Teil des Bereichs des Hinterkante. Das Sensorelement kann jedoch auch umlaufend längs des gesamten Außenumfangs des Deckels angeordnet sein.

Nachfolgend ist ein Ausführungsbeispiel der Erfindung anhand der Zeichnung beschrieben. Es zeigt:
- Fig. 1:: eine schematische perspektivische Darstellung eines öffnungsfähigen Fahrzeugdachs,
- Fig. 2:: einen Teillängsschnitt durch den Rand des Deckels und des angrenzenden Fahrzeugdachs mit einem eingeklemmten Gegenstand im Bereich der Vorderkante des Deckels,
- Fig. 3:: einen Teillängsschnitt mit eingeklemmtem Gegenstand im Bereich der Hinterkante des Deckels,
- Fig. 4:: eine vergrößerte Detaildarstellung gemäß Fig. 2 in einer ersten Ausführungsform,
- Fig. 5:: eine Teilaufsicht auf den Deckelrand von unten zur Verdeutlichung zusätzlicher Querrippen im Bereich der Nut,
- Fig. 6:: eine alternative Ausgestaltung zur Fig. 3 mit einer abgewandelten Nutform und
- Fig. 7:: eine Ausführungsform, bei der die Nut des Kunststoffrahmens mit einem weicheren Material ausgefüllt ist.

In einem festen Fahrzeugdach 1 ist eine Dachöffnung 5 vorgesehen, die mittels eines insgesamt mit 2 bezeichneten Deckels wahlweise verschließbar oder zumindestens teilweise freilegbar ist. Im vorliegenden Fall ist der Deckel 2 einem Schiebehebedach zugeordnet, dessen Hinterkante mittels einer nicht dargestellten Mechanik im Seitenbereich des Deckels über das feste Fahrzeugdach 1 ausstellbar und dessen Hinterkante zum anderen unter das feste Fahrzeugdach 1 absenkbar und nach hinten verschiebbar ist.

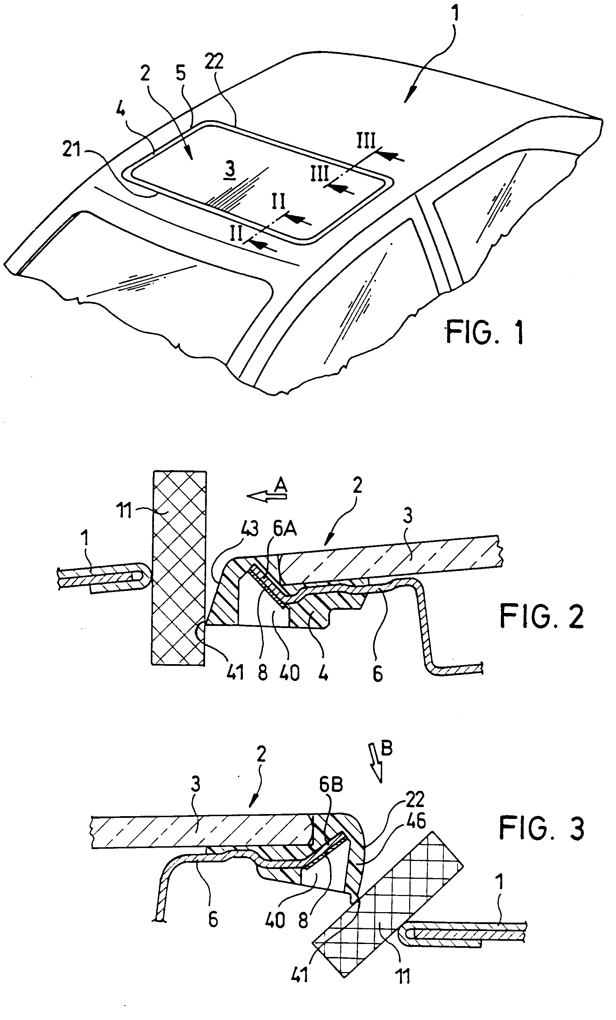

Bei einem solchen Deckel 2 können, wie in den Fig. 2 und 3 dargestellt, bei einem motorischen Schließvorgang Einklemm- Gegenstände 11 bzw. eingeklemmte Körperteile sowohl an der Vorderkante des Deckels 2 (Fig. 2) als auch im Bereich der Hinterkante des Deckels 2 (Fig. 3) zwischen diesem und dem festen Fahrzeugdach 1 beim Schließen eingeklemmt werden.

Für selbsttätig motorisch schließende Fahrzeugteile schreibt der Gesetzgeber eine Überwachung mittels einer Sensorik vor, die im Falle eines Einklemmens die Klemmkraft auf 100 Newton begrenzt.

Der Deckel 2 setzt sich aus einer Deckelplatte 3, die vorzugsweise aus Glas, alternativ auch aus transparentem Kunststoff besteht, einem im Bereich des Außenrandes angeordneten Versteifungs- und/oder Befestigungsteil - hier Deckelinnenblech 6 - sowie einem beide Teile 3 bzw. 6 verbindenden Kunststoffrahmen 4 zusammen, der durch Umschäumen oder Umspritzen der Deckelplatte 3 und des Befestigungsteils in einer Form hergestellt wird.

Gemäß der Erfindung ist vorgesehen, daß in diesen Kunststoffrahmen 4 wenigstens ein an einer dem Außenrand des Deckels zugewandten Wand des Befestigungsteils angeordnetes streifenförmiges Sensorelement 8 integriert ist, das beim Schließen des Deckels 2 im Einklemmfall durch eine partielle Deformation des Kunststoffrahmens 4 betätigt wird und dadurch ein Einklemmen eines Körperteils oder Gegenstandes signalisiert. Als Sensorelement 8 ist beispielsweise ein aus der DE 44 27 537 A1 bekanntes FSR-Element (force sensing resistor) verwendbar. Ein derartiges Sensorelement verändert unter Druck seinen Widerstand, so daß eine Verformung, die auf einen Einklemmfall hinweist, mittels einer Auswertelogik leicht erkannt werden kann.

In den Kunststoffrahmen 4 ist bevorzugt eine nach unten offene Nut 40 eingeformt, die annähernd V-förmig oder auch trapezförmig ausgebildet sein kann. Die Nut 40 grenzt mit ihrer nach außen gerichteten Wand an einen außenliegenden umlaufenden Steg 46 des Kunststoffrahmens 4 an, dessen außen liegende Anlagefläche 43 von oben nach unten schräg nach außen abfallend geneigt ist. Die am weitesten vorspringende untenliegende Außenkante 41 tritt im Einklemmfall gemäß Fig. 2 bei einer Bewegung in Pfeilrichtung A zuerst mit einem Einklemm-Gegenstand 11 in Kontakt. Die sich darüber erstreckende Anlagefläche 43 dient im geschlossenem Zustand zur Anlage am festen Fahrzeugdach 1 oder einer an diesem angeordneten, nicht dargestellten Dichtung.

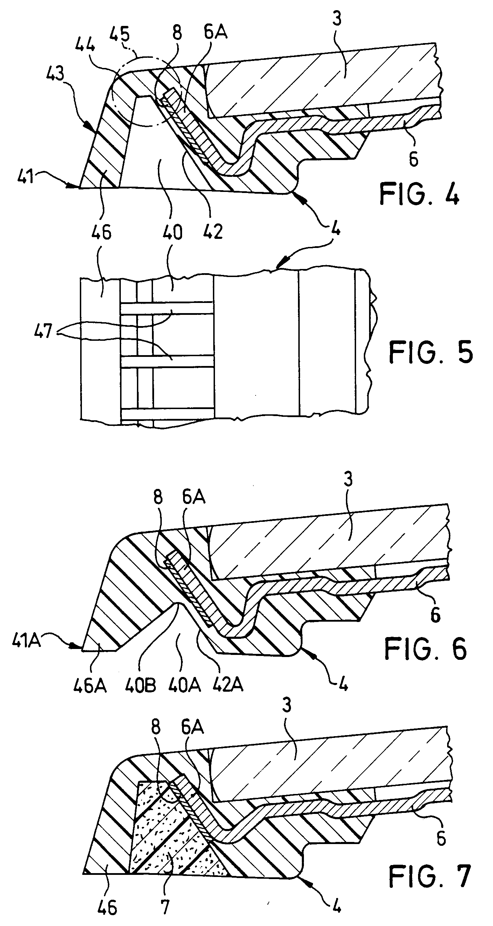

Wie in den Fig. 2 bis 7 dargestellt, ist das Sensorelement 8 bevorzugt an einer von außen nach innen schräg nach unten geneigt verlaufenden Wand 42 der Nut 40 angeordnet, wobei sich die Rückseite des Sensorelements 8 stets gegen eine steife Wand 6A bzw. 6B im schräg nach oben abgewinkelten Außenbereich des Deckelinnenblechs 6 abstützt, die in den Fig. 2, 3 und 7 die Nut 40 unmittelbar begrenzt. In den Varianten gemäß den Fig. 4 und 6 ist das Sensorelement 8 hingegen zur Nut 40 bzw. 40A hin von einer relativ dünnen Schicht des Materials des Kunststoffrahmens 4 überdeckt. Das Sensorelement wird bevorzugt an der Wand 6A bzw. 6B des Deckelinnenblechs 6 mittels Kleben fixiert, wobei dies bereits vor dem Umschäumen bzw. Umspritzen erfolgen kann; alternativ dazu ist es jedoch bei den Ausführungsformen gemäß den Fig. 2, 3 und 7 auch möglich, das Sensorelement nachträglich an der Wand 6A bzw. 6B des Deckelinnenblechs 6 anzuordnen und beispielsweise wiederum durch Kleben oder durch das Ausschäumen der Nut 40 mit einem weicheren Material 7 zu fixieren.

Ein sich oberhalb des Grundes der Nut 40 erstreckender Bereich 45 des Kunststoffrahmens 4 ist in den Fig. 2 bis 4 und 7 relativ dünnwandig ausgebildet und wirkt beim Auftreffen der Außenkante 41 auf einen Einklemm-Gegenstand 11 ähnlich wie ein elastisches Filmscharnier, so daß sich der Steg 46 relativ leicht nach innen biegen laßt. Dabei wird das Sensorelement 8 insbesondere in seinem oberen in Fig. 4 durch den Kreis bei 45 bezeichneten Bereich deformiert, wodurch es bereits zu einer spürbaren Widerstandveränderung kommen kann.

Die Übertragung der Druckkräfte von einem Einklemmgegenstand 11 auf das Sensorelement 8 kann zusätzlich durch Querrippen 47 unterstützt werden, welche im Bereich der Nut beabstandet voneinander den Steg 46 mit der Innenwand 42 verbinden (Fig. 5).

Gemäß einer weiteren Alternative, die in Fig. 6 dargestellt ist, endet eine bevorzugt im Querschnitt V-förmige Nut 40A mit ihrem Nutgrund 40B etwa in Höhe der Mitte des Sensorelements 8. Bei einer Verformung der Außenkante 41A infolge Einklemmens wird der Steg 46A nach innen gebogen, wobei sich durch die Anordnung des Nutgrundes 40B günstige Hebelverhältnisse für eine Kraftübertragung auf das Sensorelement 8 ergeben. Die Innenwand 42A der Nut überlagert in diesem Fall nur im unteren Teil mit einer relativ dünnen Schicht das Sensorelement 8. Die Ausführungsform gemäß Fig. 6 ist besonders kostengünstig herstellbar, weil das Sensorelement 8 hierbei unmittelbar, beispielsweise durch Kleben an der Wand 6A des Deckelinnenblechs befestigt werden kann und mit diesem gemeinsam in der Form für das Umspritzen oder Umschäumen des Deckels positioniert wird. Das Sensorelement 8 ist vollständig von einem einzigen Material des Kunststoffrahmen 4 umschlossen und dadurch sehr gut geschützt. Auf zusätzliche Querrippen 47 kann bei einer Ausführungsform gemäß Fig. 6 verzichtet werden, wodurch auch das benötigte Formwerkzeug besonders einfach gestaltet sein kann.

Gemäß einer vorteilhaften Weiterbildung ist - wie in Fig. 7 dargestellt - der gesamte Bereich der Nut 40 bzw. 40A von einem gegenüber dem Material des Kunststoffrahmens 4 weicheren Material ausgefüllt, das bei einer Verformung des Steges 46 als elastischer Puffer zur Übertragung der Druckkraft auf das Sensorelement 8 wirkt.

Ebenso wie beim Einklemmen an der Vorderkante gemäß Fig. 2 oder 4 wird bei einem Absenken der Hinterkante des Deckels 2 (gemäß Pfeil B in Fig. 3) ein Einklemm-Gegenstand 11 durch die Deformation der Anlagefläche 43 sowie ggfs. des in der Nut 40 bzw. 40 A vorhandenen, ebenfalls weicheren Materials 7 mittels des Sensorelements 8 erkannt.

Die Oberkante 44 des Kunststoffrahmens 4 ist in an sich bekannter Weise bündig mit der Oberkante der Deckelplatte 3 angeordnet. Das Deckelinnenblech 6 dient zur Versteifung des Deckels 2 sowie zur Anbringung zusätzlicher seitlicher Blenden oder zur Anbindung der Betätigungsmechanik des Deckels mittels Ausstellhebeln oder Kulissen. Das Deckelinnenblech 6 kann einteilig oder mehrteilig ausgebildet sein.

Die Herstellung des Deckels 2 erfolgt bevorzugt in einer Spritz- oder Gießform, in welche die Deckelplatte 3 und das oder die Deckelinnenbleche 6 eingelegt werden, wobei ein zweiteiliges Werkzeug insgesamt die Außenkontur des Kunststoffrahmens 4 vorgibt. Das Sensorelement 8 wird bevorzugt unmittelbar beim Spritzen, Gießen oder Umschäumen mit in den Kunststoffrahmen 4 integriert; es kann jedoch auch gemäß einer zweiten Variante erst nach dem Spritzen, Gießen oder Umschäumen an der Wand 6A bzw. 6 B des Deckelinnenblechs 6 befestigt werden und ggfs. zusätzlich beim Spritzen oder Schäumen des weicheren Materials 7 fixiert werden.

Die Nut 40 bzw. 40A wird von einem festen Werkzeugteil oder von einem bewegbaren Werkzeugteil in Form eines Schiebers gebildet, das beim Herausfahren aus dem Hauptwerkzeug die Nut bildet.

Diese kann dann im Wege des 2-Komponenten-Spritz- oder Schäumverfahrens mit dem weicheren elastischen Material 7 aufgefüllt werden. Als Material für den Kunststoffrahmen 4 eignet sich beispielsweise Polyurethan (PU) mit einer Shore-Härte von etwa 90; für das weichere elastische Material ein PU-Schaum mit einer Shore-Härte von etwa 30.

Statt eines direkten Einbringens des Sensorelements 8 mit dem Deckelinnenblech 6 in den Kunststoffrahmen 4 beim Spritzen bzw. Schäumen oder Gießen ist auch ein nachträgliches Einbringen des Sensorelements 8 durch Kleben in eine eingeformte Nut 40 denkbar. Das Einbringen eines weicheren Materials in die Nut 40 kann ebenfalls in einem getrennten Arbeitsgang erfolgen. Statt eines Anbringens an einem Verstärkungs- bzw. Befestigungsteil kann insbesondere bei einer dickeren Deckelplatte 3 auch eine Befestigung am Außenrand der Deckelplatte 3 erfolgen. Wesentlich ist die Abstützung des Sensorelements 8 an einer steifen Wand eines Teils des Deckels 2, der beim Umspritzen oder Umschäumen bzw. Gießen des Kunststoffrahmens 4 in der Form positioniert wird, so daß ein einfaches definiertes Positionieren des Sensorelements - unabhängig davon, ob dies vor oder nach dem Umspritzen, Umschäumen oder Gießen, oder danach erfolgt - stattfinden kann. Ein weiterer Vorteil liegt darin, daß durch die stabile Abstützung des Sensorelements 8 dieses bei einer Verformung des Kunststoffrahmens nicht mit diesem nach innen ausweichen kann, wodurch die Ansprech-Empfindlichkeit des Sensorelements im Einklemmfall deutlich erhöht wird.

## Patentansprüche

1. Deckel (2) eines öffnungsfähigen Fahrzeugdachs, mit einer Deckelplatte (3) und wenigstens einem Befestigungsteil (Deckelinnenblech 6), welche mittels eines geschäumten oder gespritzten Kunststoffrahmens (4) verbunden sind, **dadurch gekennzeichnet**, daß ein Sensorelement (8) zum Erkennen eines Einklemmvorgangs an einer dem Außenrand des Deckels (2) zugewandten Wand (6A bzw. 6B)des Befestigungsteils (Deckelinnenblech 6) angeordnet ist.

2. Deckel nach Anspruch 1, **dadurch gekennzeichnet**, daß die Wand (6A bzw. 6B) des Befestigungsteils (Deckelinnenblech 6) von außen nach innen schräg abwärts geneigt verläuft.

3. Deckel nach Anspruch 1, **dadurch gekennzeichnet**, daß der Kunststoffrahmen (4) im Bereich des Sensorelements (8) eine Nut (40 bzw. 40A) aufweist.

4. Deckel nach Anspruch 3, **dadurch gekennzeichnet**, daß die Nut (40 bzw. 40A) nach unten geöffnet ist.

5. Deckel nach Anspruch 3 oder 4, **dadurch gekennzeichnet**, daß der Nutgrund (40B) etwa auf Höhe der Mitte des Sensorelements (8) verläuft.

6. Deckel nach einem der Ansprüche 3 bis 5, **dadurch gekennzeichnet**, daß die Nut (40 bzw. 40A) durch quer verlaufende Rippen (47) des Kunststoffrahmens unterbrochen ist.

7. Deckel nach einem der Ansprüche 1 bis 7, **dadurch gekennzeichnet**, daß der Kunststoffrahmen (4) eine Shore-Härte von etwa 90 aufweist.

8. Deckel nach einem der Ansprüche 3 bis 7, **dadurch gekennzeichnet**, daß die Nut (40 bzw. 40A) mit einem gegenüber dem Material des Kunststoffrahmens (4) weicheren Material (7) ausgefüllt ist.

9. Deckel nach Anspruch 8, **dadurch gekennzeichnet**, daß das weichere Material (7) eine Shore-Härte von etwa 30° aufweist.

10. Deckel nach einem der vorhergehenden Ansprüche, **dadurch gekennzeichnet**, daß das Sensorelement (8) durch Kleben mit dem Befestigungsteil (Deckelinnenblech 6) verbunden ist.

11. Deckel nach einem der vorhergehenden Ansprüche, **dadurch gekennzeichnet**, daß das Sensorelement (8) an seiner dem Außenrand des Deckels (2) zugewandten Seite vom Material des Kunststoffrahmens (4) bedeckt ist.

12. Deckel nach einem der Ansprüche 8 bis 11, **dadurch gekennzeichnet**, daß das weichere Material (7) mittels eines Zweikomponenten-Spritzverfahrens in die Nut (40 bzw. 40A) eingebracht wird.
